# EUROPÄISCHE PATENTSCHRIFT

(11) **EP 4 384 356 B1**
(45) Veröffentlichungstag und Bekanntmachung des Hinweises auf die Patenterteilung: **03.09.2025**
(21) Anmeldenummer: 22764768.2
(22) Anmeldetag: 12.08.2022
(51) Int. Cl.: B25J 9/00

(54) **EXOSKELETT-VORRICHTUNG UND VERFAHREN**
EXOSKELETON APPARATUS AND METHOD
ENSEMBLE EXOSQUELETTE ET PROCÉDÉ

(30) Priorität: 13.08.2021 DE 102021208900
(43) Veröffentlichungstag der Anmeldung: 19.06.2024
(73) Patentinhaber: Festool GmbH, 73240 Wendlingen (DE)
(72) Erfinder: WEIDNER, Robert, 29581 Bohlsen (DE); OTTEN, Bernward, 20099 Hamburg (DE)
(74) Vertreter: Patentanwälte Magenbauer & Kollegen Partnerschaft mbB
(86) Internationale Anmeldenummer: PCT/EP2022/072719
(87) Internationale Veröffentlichungsnummer: WO 2023/017176

(56) Entgegenhaltungen:
- WO-A1-2010/101595
- US-A1- 2014 378 882
- US-A1- 2020 038 218

## Beschreibung

Die Erfindung betrifft eine Exoskelett-Vorrichtung, umfassend ein Exoskelett mit einem Basisabschnitt zur Anbringung an einen Körperabschnitt, insbesondere den Torso, eines menschlichen Körpers, einem beweglich mit dem Basisabschnitt gekoppelten Unterstützungsabschnitt zur Unterstützung eines Körperteils, vorzugsweise einer Gliedmaße, insbesondere eines Arms, des menschlichen Körpers, und einer auf den Unterstützungsabschnitt wirkenden, insbesondere pneumatischen, Aktoreinrichtung zur Bereitstellung einer Unterstützungskraft für den Körperteil.

Das Exoskelett wird am menschlichen Körper getragen und unterstützt das muskuloskelettale System in bestimmten Körperhaltungen und Bewegungen. Bevorzugte Einsatzbereiche des Exoskeletts sind handwerkliche und industrielle Anwendungen, bei denen der Anwender bei wiederholten Tätigkeiten in belastenden Körperhaltungen vom Exoskelett unterstützt wird. Der Anwender nimmt bei diesen Tätigkeiten unterschiedliche Körperhaltungen ein, beispielsweise verschiedene Oberkörpervorlagen, welche einen Einfluss auf die vom Exoskelett bereitgestellte Unterstützung haben können.

Exoskelette sind beispielsweise aus der WO2017157941A1, EP3266422A1, der EP2754538B1 und der US20150025423A1 bekannt.

Die WO 2010/101595 A1 beschreibt ein Untere-Extremität-Exoskelett, dem Sensoren hinzugefügt werden, um den absoluten Winkel zwischen dem Exoskelet-Rumpf und dem Gravitations-Vektor zu messen, um es dadurch zu ermöglichen, das Moment, das durch eine Last um Hüftachsen erzeugt wird, genauer zu berechnen.

Die US 2020/0038218 A1 beschreibt eine Arm-Hebe-Unterstützungs-Vorrichtung mit einer künstlichen Sehne. Ein Steuersystem umfasst einen oder mehrere Haltungssensoren, die angeordnet sind, um eine aktuelle Ausrichtung wenigstens eines aus dem Torso des Benutzers und dem Oberarm des Benutzers zu detektieren, in Bezug auf eine horizontale Ebene.

Die US 2014/0378882 A1 beschreibt ein Exoskelett mit zwei Drehmomen-Generatoren, zwei Schenkel-Verbindungen und einem Unterstützungs-Rumpf, der drehbar an die Schenkel-Verbindungen gekoppelt ist.

Eine Aufgabe der Erfindung besteht darin, die Betriebssicherheit und/oder den Nutzungskomfort der Exoskelett-Vorrichtung zu erhöhen.

Die Aufgabe wird gelöst durch eine Exoskelett-Vorrichtung gemäß Anspruch 1. Die Exoskelett-Vorrichtung umfasst eine Sensoreinrichtung zur Erfassung einer Lageinformation, die eine Lage des Exoskeletts, insbesondere des Basisabschnitts und/oder des Unterstützungsabschnitts, in Bezug auf die Umgebung, insbesondere in Bezug auf die Schwerkraft, anzeigt, und eine Steuereinrichtung zur Ansteuerung der Aktoreinrichtung, wobei die Steuereinrichtung ausgebildet ist, auf Basis der erfassten Lageinformation die Bereitstellung der Unterstützungskraft anzupassen und/oder auf Basis der erfassten Lageinformation die Form des Basisabschnitts und/oder die Anbringung des Basisabschnitts am menschlichen Körper anzupassen. Die Steuereinrichtung ist ausgebildet, die Unterstützungskraft gemäß einer Kennlinie einzustellen, die die Unterstützungskraft in Abhängigkeit zu einem Winkel zwischen dem Basisabschnitt und dem Unterstützungsabschnitt setzt, und die Steuereinrichtung ist ferner ausgebildet, auf Basis der erfassten Lageinformation die Kennlinie zu skalieren und/oder in Bezug auf den Winkel zu verschieben.

Durch diese Erfassung und Berücksichtigung der Lageinformation kann das Exoskelett beispielsweise eine situative und/oder haltungsabhängige Anpassung der Unterstützungskraft vornehmen und/oder Sicherheits- oder Komfortfunktionen gemäß der Oberkörperhaltung des Nutzers bereitstellen. Über die Erfassung der Lageinformation kann das Exoskelett die Oberkörperhaltung des Anwenders erkennen und eine entsprechende Anpassung des Unterstützungskraftverhaltens vornehmen. Auf diese Weise kann der Nutzungskomfort bei der Arbeit mit dem Exoskelett erhöht werden. Ferner wird es durch die Erfassung der Lageinformation möglich, eine Gefahrensituation zu erkennen, beispielsweise dass der Anwender fällt oder stürzt. In diesem Fall kann durch das Exoskelett eine geeignete Maßnahme ausgelöst werden, beispielsweise das Abschalten der Unterstützungskraft und/oder des Exoskeletts.

Der Körperteil ist vorzugsweise eine Gliedmaße des menschlichen Körpers. Beispielsweise ist der Körperteil ein Arm des menschlichen Körpers. Ferner kann es sich bei dem Körperteil um den Rücken des menschlichen Körpers handeln. In diesem Fall dient der Basisabschnitt zweckmäßigerweise zur Anbringung an ein Bein des menschlichen Körpers; d.h. der Körperabschnitt (an den der Basisabschnitt anzubringen ist) kann in dem Fall, in dem der Körperteil der Rücken ist, beispielsweise ein Bein sein.

Vorteilhafte Weiterbildungen sind Gegenstand der Unteransprüche.

Die Erfindung betrifft ferner ein Verfahren gemäß Anspruch 15.

Weitere exemplarische Details sowie beispielhafte Ausführungsformen werden nachstehend unter Bezugnahme auf die Figuren erläutert. Dabei zeigt
- Figur 1: eine schematische Seitenansicht einer Exoskelett-Vorrichtung,
- Figur 2: eine schematische Seitenansicht eines von einem Anwender getragenen Exoskeletts,
- Figur 3: eine schematische Detailansicht eines Unterstützungsabschnitts des Exoskeletts,
- Figur 4: eine schematische Rückansicht des Exoskeletts,
- Figur 5: verschiedene Neigungen des von dem Anwender getragenen Exoskeletts, und
- Figur 6: ein Schaubild mit Kennlinien, die eine Unterstützungskraft in Abhängigkeit zu einem Winkel setzen.

Bei den nachfolgenden Erläuterungen wird Bezug genommen auf die in den Figuren eingezeichneten, orthogonal zueinander ausgerichteten Raumrichtungen x-Richtung, y-Richtung und z-Richtung. Die z-Richtung kann auch als Vertikalrichtung, die x-Richtung als Tiefenrichtung und die y-Richtung als Breitenrichtung bezeichnet werden.

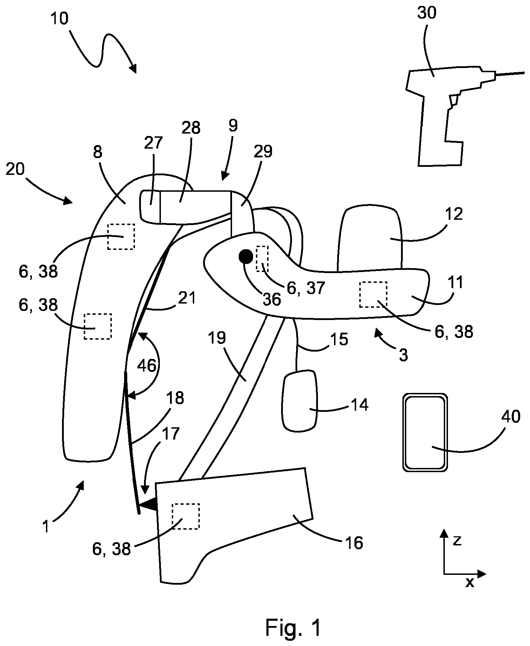

Die Figur 1 zeigt eine schematische Darstellung einer Exoskelett-Vorrichtung 10, die ein Exoskelett 20 sowie optional ein Werkzeug 30 und/oder ein Mobilgerät 40 umfasst. Das Exoskelett 20 kann auch für sich genommen bereitgestellt sein. Das Werkzeug 30 und/oder das Mobilgerät 40 sind exemplarisch separat von dem Exoskelett 20 vorhanden, also insbesondere nicht mechanisch mit dem Exoskelett 20 verbunden. Bei dem Werkzeug 30 handelt es sich beispielsweise um ein Elektrowerkzeug, insbesondere um einen Akkuschrauber und/oder eine Bohrmaschine und/oder eine Schleifmaschine. Das Mobilgerät 40 ist vorzugsweise ein Smartphone oder ein Tablet. Optional ist das Exoskelett 20 ausgebildet, mit dem Werkzeug 30 und/oder dem Mobilgerät 40 zu kommunizieren, insbesondere drahtlos.

Exemplarisch ist das Exoskelett 20 in einer aufrechten Ausrichtung mit seiner Vertikalachse (die insbesondere parallel zu einer Basisabschnitt-Achse 62 verläuft) parallel zur z-Richtung ausgerichtet. Insbesondere ist das Exoskelett 20 in der aufrechten Ausrichtung mit seiner Sagitalachse parallel zur x-Richtung ausgerichtet. Die Sagitalachse des Exoskeletts 20 verläuft in einem Zustand, in dem der Anwender das Exoskelett 20 angelegt hat, parallel zur Sagitalachse des Anwenders, also insbesondere parallel zu einer Richtung von hinten - also insbesondere dem Rücken des Anwenders - nach vorne - also insbesondere der Brust des Anwenders. Die Horizontalachse des Exoskeletts 20 verläuft insbesondere in Breitenrichtung des Exoskeletts 20 und/oder parallel zur y-Richtung. Die Horizontalachse des Exoskeletts 20 verläuft in einem Zustand, in dem der Anwender das Exoskelett 20 angelegt hat, parallel zur Horizontalachse des Anwenders, also insbesondere parallel zu einer Richtung von einer ersten Schulter des Anwenders zu einer zweiten Schulter des Anwenders. Die Vertikalachse des Exoskeletts 20, Sagitalachse des Exoskeletts 20 und die Horizontalachse des Exoskeletts 20 sind orthogonal zueinander ausgerichtet.

Die Exoskelett-Vorrichtung 10 ist insbesondere für den handwerklichen und/oder den industriellen Einsatz ausgebildet. Vorzugsweise ist die Exoskelett-Vorrichtung 10 nicht für einen medizinischen und/oder nicht für einen therapeutischen Einsatz ausgebildet.

Das Exoskelett 20 ist ein aktives Exoskelett und verfügt insbesondere über eine interne Energiequelle, aus der die Energie für die Unterstützungskraft bereitgestellt wird. Insbesondere ist das Exoskelett 20 ein aktives Exoskelett zur aktiven Unterstützung des Schultergelenks des Anwenders.

Das Exoskelett 20 umfasst einen Basisabschnitt 1, der zur Anbringung an einen Körperabschnitt eines menschlichen Körpers eines Anwenders dient. Exemplarisch dient der Basisabschnitt 1 dazu, an den Torso 2 des menschlichen Körpers angebracht zu werden.

Der Basisabschnitt 1 umfasst einen Hauptabschnitt und ein textiles Tragesystem, das insbesondere lösbar an dem Hauptabschnitt angebracht ist. Der Hauptabschnitt dient exemplarisch dazu, mittels des textilen Tragesystems an dem Rücken des menschlichen Körpers getragen zu werden, insbesondere rucksackartig. Der Hauptabschnitt umfasst ein Rückenteil 8, das insbesondere länglich ausgeführt ist und das zweckmäßigerweise mit seiner Längsachse vertikal und/oder in Längsrichtung des Rückens des Anwenders ausgerichtet ist.

Beispielsweise erstreckt sich die Längsrichtung des Rückenteils 8 entlang der Längsrichtung des Rückens. Der Hauptabschnitt umfasst ferner ein insbesondere leistenförmiges und/oder steifes Kraftübertragungselement 18, das sich von dem Rückenteil 8 nach unten hin zu einem Beckengurt 16 erstreckt, um das Rückenteil 8 mechanisch mit dem Beckengurt 16 zu koppeln. Das Kraftübertragungselement 18 dient zweckmäßigerweise dazu, um eine von einem Unterstützungsabschnitt 3 auf das Rückenteil 8 übertragene Reaktionskraft weiter zum Beckengurt 16 zu übertragen. Exemplarisch ist das Rückenteil 8 schlauchförmig und/oder rucksackförmig ausgeführt. Das Rückenteil 8 ist insbesondere steif ausgeführt. Insbesondere umfasst das Rückenteil 8 ein zweckmäßigerweise steifes Rückenteil-Gehäuse, das beispielsweise aus einem insbesondere steifen Kunststoff und/oder als Hartschale gefertigt ist. Das Rückenteil 8 dient zweckmäßigerweise dazu, eine Kraft von dem Unterstützungsabschnitt 3 an das Kraftübertragungselement 18 zu übertragen und/oder Komponenten für die Steuerung der Unterstützungskraft aufzunehmen.

Der Unterstützungsabschnitt 3 kann zweckmäßigerweise als Armaktor bezeichnet werden.

Das Kraftübertragungselement 18 ist exemplarisch schwertförmig ausgeführt und kann auch als Schwert bezeichnet werden. Zweckmäßigerweise ist das Kraftübertragungselement 18 relativ zum Rückenteil 8 verstellbar ausgeführt, um insbesondere die vertikale Erstreckung des Hauptabschnitts und/oder einen dem Rücken des Anwenders zugewandten Kraftübertragungselement-Winkel 46 zwischen dem Kraftübertragungselement 18 und dem Rückenteil 8 zu verändern. Zweckmäßigerweise ist das Kraftübertragungselement 18 translatorisch und/oder rotatorisch beweglich relativ zum Rückenteil 8 gelagert und insbesondere in verschiedene translatorische und/oder rotatorische Stellungen relativ zum Rückenteil 8 versetzbar und insbesondere verriegelbar. Die translatorische Bewegung erfolgt insbesondere vertikal. Die rotatorische Bewegung erfolgt zweckmäßigerweise um eine parallel zur y-Richtung ausgerichtete Verstellachse.

Das textile Tragesystem umfasst exemplarisch den Beckengurt 16 und/oder wenigstens einen, vorzugsweise zwei, Schultergurte 19. Der Beckengurt 16 bildet zweckmäßigerweise eine Schlaufe, so dass er im getragenen Zustand den Torso 2, insbesondere die Hüfte, des Anwenders umschließt. Jeder Schultergurt 19 verläuft exemplarisch vom Hauptabschnitt, insbesondere vom Rückenteil 8, hin zum Beckengurt 16, und zwar zweckmäßigerweise im getragenen Zustand des Exoskeletts 20 über eine jeweilige Schulter des Anwenders.

Das Exoskelett 20 umfasst ferner exemplarisch ein Kraftübertragungselement-Gelenk 17, über das das Kraftübertragungselement 18 an dem Beckengurt 16 angebracht ist. Das Kraftübertragungselement-Gelenk 17 ist beispielsweise als Kugelgelenk ausgeführt und kann als Sakrumgelenk bezeichnet werden. Im getragenen Zustand des Exoskeletts 20 ist das Kraftübertragungselement-Gelenk 17 im unteren Rückenbereich des Anwenders angeordnet, insbesondere in Breitenrichtung zentriert.

Das textile Tragesystem umfasst exemplarisch ferner ein Rückennetz 21, das an der dem Rücken des Anwenders zugewandten Seite des Rückenteils 8 angeordnet ist. Im getragenen Zustand des Exoskeletts 20 liegt das Rückennetz 21 an dem Rücken des Anwenders an, insbesondere zumindest teilweise und/oder im oberen Rückenbereich.

Das Exoskelett 20 umfasst ferner den beweglich mit dem Basisabschnitt 1 gekoppelten Unterstützungsabschnitt 3 zur Unterstützung eines Körperteils, vorzugsweise einer Gliedmaße, insbesondere eines Arms 4, des menschlichen Körpers des Anwenders. Der Unterstützungsabschnitt 3 ist insbesondere ausgebildet, an dem Körperteil, vorzugsweise der Gliedmaße, insbesondere dem Arm 4, des Anwenders befestigt zu werden. Der Unterstützungsabschnitt 3 umfasst exemplarisch ein insbesondere steifes Armteil 11 und eine am Armteil 11 angeordnete Armbefestigung 12, die exemplarisch als Armschale ausgeführt ist. Das Armteil 11 ist exemplarisch länglich ausgeführt und ist im getragenen Zustand mit seiner Längsachse in Richtung der Längsachse des Arms des Anwenders ausgerichtet. Exemplarisch erstreckt sich das Armteil 11 von der Schulter des Anwenders bis zum Ellbogenbereich des Anwenders. Das Exoskelett 20, insbesondere das Armteil 11, endet exemplarisch am Ellbogenbereich des Anwenders. Die Armbefestigung 12 dient insbesondere zur Befestigung des Unterstützungsabschnitts 3 an dem Arm 4, insbesondere dem Oberarm, des Anwenders. Insbesondere umgreift die Armschale den Oberarm des Anwenders, insbesondere zumindest teilweise, so dass der Oberarm mit einem Band in der Armschale gehalten werden kann. Der Unterarm des Anwenders wird zweckmäßigerweise nicht am Exoskelett 20 befestigt.

Der Unterstützungsabschnitt 3 ist exemplarisch um eine horizontale Schwenkachse relativ zum Basisabschnitt 1, insbesondere relativ zum Rückenteil 8, verschwenkbar gelagert. Exemplarisch ist der Unterstützungsabschnitt 3 direkt an einem Schulterteil 29 gelagert. Die horizontale Schwenkachse kann auch als Hebeachse 36 bezeichnet werden. Im getragenen Zustand des Exoskeletts 20 ist die Hebeachse 36 im Bereich der Schulter des Anwenders angeordnet. Das Exoskelett 20 ist insbesondere ausgebildet, mit dem Unterstützungsabschnitt 3 das Schultergelenk des Anwenders zu unterstützen. Im getragenen Zustand des Exoskeletts 20 kann der Anwender durch ein Verschwenken des Unterstützungsabschnitts 3 um die Hebeachse 36 mit seinem von dem Unterstützungsabschnitt 3 unterstützten Arm 4 eine Hebebewegung ausführen. Die Hebeachse 36 kann insbesondere in y-Richtung ausgerichtet sein. Zweckmäßigerweise liegt die Hebeachse 36 stets in einer horizontalen Ebene, beispielsweise einer x-y-Ebene. Unter einer horizontalen Ebene ist insbesondere eine exakt horizontale Ebene und/oder eine Ebene zu verstehen, die maximal um 10 Grad, 7 Grad oder 5 Grad gegenüber einer Horizontalen gekippt ist.

Der Schwenkwinkel 47 des Unterstützungsabschnitts 3 um die Hebeachse 36 relativ zum Basisabschnitt 1 soll auch als Hebewinkel bezeichnet werden. Der Schwenkwinkel 47 hat bei einem nach unten ausgerichteten Unterstützungsabschnitt 3 (bei einem vertikal ausgerichteten Exoskelett 20) einen Referenzwert, insbesondere einen Minimalwert, und steigt bei einem nach oben gerichteten Verschwenken des Unterstützungsabschnitts 3 kontinuierlich bis zu einem Maximalwert an. Der Minimalwert ist insbesondere ein betragsmäßiger Minimalwert, beispielsweise Null.

Exemplarisch ist der Schwenkwinkel 47 als Winkel zwischen einer Unterstützungsabschnitt-Achse 61 und einer Basisabschnitt-Achse 62 definiert. Die Unterstützungsabschnitt-Achse 61 verläuft in Längsrichtung des Unterstützungsabschnitts 3. Exemplarisch verläuft die Unterstützungsabschnitt-Achse 61 von der Hebeachse 36 in Richtung zu der Armbefestigung 12. In einem Zustand, in dem der Anwender das Exoskelett 20 angelegt hat, verläuft die Unterstützungsabschnitt-Achse 61 zweckmäßigerweise parallel zu einer Oberarm-Achse des von dem Unterstützungsabschnitt 3 unterstützten Arms 4. Die Basisabschnitt-Achse 62 stellt zweckmäßigerweise eine vertikale Achse des Basisabschnitts 1 dar und verläuft vertikal nach unten, insbesondere bei einer vertikalen Ausrichtung des Basisabschnitts 1, beispielsweise in einem Zustand, in dem der Anwender das Exoskelett 20 angelegt hat und aufrecht steht. Der Schwenkwinkel 47 liegt exemplarisch in einer z-x-Ebene.

Das Exoskelett 20 umfasst exemplarisch eine Schultergelenkanordnung 9, über die der Unterstützungsabschnitt 3 an dem Basisabschnitt 1, insbesondere dem Rückenteil 8, angebracht ist. Die Schultergelenkanordnung 9 umfasst zweckmäßigerweise eine Gelenkkette mit einem oder mehrerer Drehlager zur Definition einer oder mehrerer vertikaler Drehachsen. Mittels der Gelenkkette ist zweckmäßigerweise ein Verschwenken des Unterstützungsabschnitts 3 relativ zum Basisabschnitt 1, insbesondere relativ zum Rückenteil 8, in einer vorzugsweise horizontalen Schwenkebene möglich, beispielsweise um eine insbesondere virtuelle vertikale Drehachse. Insbesondere ermöglicht es die Gelenkkette dem Anwender, seinen von dem Unterstützungsabschnitt 3 unterstützten Arm 4 um eine durch die Schulter des Anwenders verlaufende vertikale Drehachse zu schwenken, wobei der Unterstützungsabschnitt 3 mit dem Arm 4 mitbewegt wird. Exemplarisch ist die Gelenkkette passiv ausgeführt, so dass das Exoskelett 20 bei dem Verschwenken des Arms in der vorzugsweise horizontalen Schwenkebene keine aktive Unterstützungskraft in Richtung der horizontalen Schwenkbewegung bereitstellt.

Die Schultergelenkanordnung 9 ist zweckmäßigerweise derart angeordnet und/oder ausgebildet, dass sie einen freien Raum definiert, der sich im getragenen Zustand des Exoskeletts 20 oberhalb der Schulter des das Exoskelett 20 tragenden Anwenders befindet, so dass der Anwender durch den freien Raum an der Schultergelenkanordnung 9 vorbei seinen von dem Unterstützungsabschnitt 3 unterstützen Arm senkrecht nach oben ausrichten kann.

Die Schultergelenkanordnung 9 umfasst exemplarisch einen inneren Schultergelenkabschnitt 27, der mittels eines ersten Drehlagers der Schultergelenkanordnung 9 um eine erste vertikale Drehachse verschwenkbar relativ zum Basisabschnitt 1, insbesondere zum Rückenteil 8, gelagert ist. Die Schultergelenkanordnung 9 umfasst exemplarisch ferner einen äußeren Schultergelenkabschnitt 28, der mittels eines zweiten Drehlagers der Schultergelenkanordnung 9 um eine zweite vertikale Drehachse verschwenkbar relativ zum inneren Schultergelenkabschnitt 27 gelagert ist. Die Schultergelenkanordnung 9 umfasst exemplarisch ferner ein Schulterteil 29, dass mittels eines dritten Drehlagers der Schultergelenkanordnung 9 um eine dritte vertikale Drehachse verschwenkbar relativ zum äußeren Schultergelenkabschnitt 28 gelagert ist. Vorzugsweise sind der innere Schultergelenkabschnitt 27, der äußere Schultergelenkabschnitt 28 und das Schulterteil 29 in der Schultergelenkanordnung 9 derart als die Gelenkkette miteinander kinematisch gekoppelt, dass durch den Schwenkwinkel des inneren Schultergelenkabschnitts 27 relativ zum Basisabschnitt 1 der Schwenkwinkel des äußeren Schultergelenkabschnitt 28 relativ zum inneren Schultergelenkabschnitt 27 und/oder der Schwenkwinkel des Schulterteils 29 relativ zum äußeren Schultergelenkabschnitt 28 festgelegt wird.

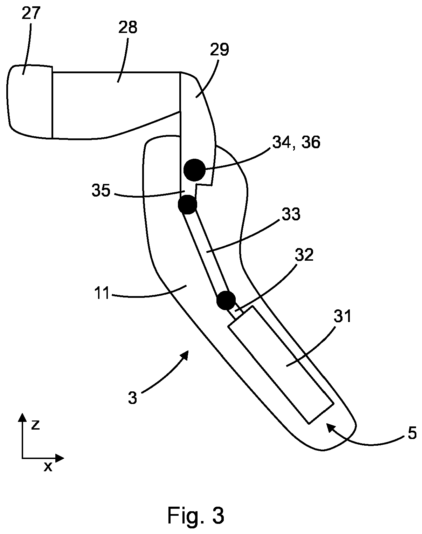

Die Figur 3 zeigt eine schematische Detailansicht des Unterstützungsabschnitts 3, wobei innerhalb des Armteils angeordnete Komponenten sichtbar eingezeichnet sind. Das Armteil 11 umfasst zweckmäßigerweise ein Armteil-Gehäuse, das insbesondere steif ausgeführt und beispielsweise aus Kunststoff gefertigt ist.

Das Exoskelett 20 umfasst eine auf den Unterstützungsabschnitt 3 wirkende Aktoreinrichtung 5 zur Bereitstellung einer Unterstützungskraft für den Körperteil, insbesondere die Gliedmaße, exemplarisch für den Arm des Anwenders. Exemplarisch ist die Aktoreinrichtung 5 zumindest teilweise in dem Armteil 11 angeordnet.

Die Aktoreinrichtung 5 ist eine aktive Aktoreinrichtung. Zweckmäßigerweise stellt das Exoskelett 20 mittels der Aktoreinrichtung 5 die Unterstützungskraft mit einer in Richtung der Schwenkbewegung um die Hebeachse 36 nach oben wirkenden Kraftkomponente bereit, die den Arm 4 des Anwenders in Richtung der Schwenkbewegung nach oben drückt.

Vorzugsweise umfasst die Aktoreinrichtung 5 eine Aktoreinheit mit einem Aktorglied 32. Die Aktoreinheit kann das Aktorglied 32 mit einer Aktorkraft beaufschlagen, um die Unterstützungskraft bereitzustellen. Das Aktorglied 32 ist mit einem exzentrisch zur Hebeachse 36 angeordneten Exzenterabschnitt 35 gekoppelt. Der Exzenterabschnitt 35 ist beispielsweise Teil des Schulterteils 29. Über die Kopplung des Aktorglieds 32 mit dem Exzenterabschnitt 35 wird durch die Aktorkraft ein Drehmoment des Unterstützungsabschnitts 3 um die Hebeachse 36 relativ zum Basisabschnitt 1 und/oder dem Schulterteil 29 bereitgestellt. Durch dieses Drehmoment drückt der Unterstützungsabschnitt 3 gegen den Körperteil, vorzugsweise die Gliedmaße, insbesondere den Arm 4, des Anwenders, insbesondere nach oben, und stellt so die auf den Körperteil, vorzugsweise die Gliedmaße, insbesondere den Arm 4, des Anwenders wirkende Unterstützungskraft bereit.

Exemplarisch verfügt die Aktoreinrichtung 5 über ein insbesondere als Schubstange ausgeführtes Koppelelement 33, über das das Aktorglied 32 mit dem Exzenterabschnitt 35 gekoppelt ist.

Bevorzugt ist die Aktoreinrichtung 5 eine pneumatische Aktoreinrichtung und die Aktoreinheit ist zweckmäßigerweise als pneumatischer Antriebszylinder 31 ausgeführt. Das Aktorglied 32 ist die Kolbenstange des Antriebszylinders 31.

Alternativ kann die Aktoreinrichtung auch nicht als pneumatische Aktoreinrichtung ausgeführt sein. Beispielsweise kann die Aktoreinrichtung als hydraulische und/oder elektrische Aktoreinrichtung ausgeführt sein und zweckmäßigerweise als die Aktoreinheit eine hydraulische Antriebseinheit und/oder eine elektrische Antriebseinheit umfassen.

Der Antriebszylinder 31, das Aktorglied 32 und/oder das Koppelelement 33 sind bevorzugt in dem Armteil-Gehäuse angeordnet.

Das Exoskelett 20 umfasst zweckmäßigerweise ein Hebe-Drehlager 34, das die Hebeachse 36 bereitstellt. Exemplarisch ist der Unterstützungsabschnitt 3 über das Hebe-Drehlager 34 an der Schultergelenkanordnung 9 angebracht.

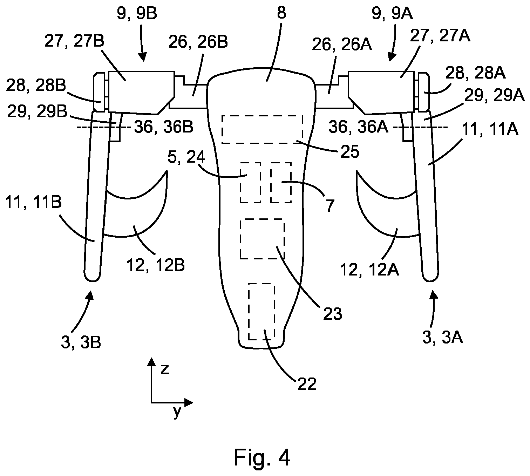

Die Figur 4 zeigt eine Rückansicht des Exoskeletts 20, wobei das textile Tragesystem und das Kraftübertragungselement 18 nicht gezeigt sind.

Das Exoskelett 20 umfasst exemplarisch einen oder mehrere Akkus 22, einen Kompressor 23, eine Ventileinheit 24 und/oder einen Drucklufttank 25, die zweckmäßigerweise Teil des Basisabschnitts 1 sind und insbesondere im Rückenteil-Gehäuse angeordnet sind.

Exemplarisch ist der Akku 22 unten am Rückenteil 8 angeordnet und insbesondere in eine Akku-Aufnahme des Rückenteils 8 von unten eingeschoben. Zweckmäßigerweise ist der Drucklufttank 25 in einem oberen Bereich im Rückenteil 8 angeordnet, exemplarisch (insbesondere in Längsrichtung des Rückenteils 8 und/oder Vertikalrichtung) über der Ventileinheit 24, der Steuereinrichtung 7, dem Kompressor 23 und/oder dem Akku 22. Die Ventileinheit 24 und/oder die Steuereinrichtung 7 ist (insbesondere in Längsrichtung des Rückenteils 8 und/oder Vertikalrichtung) zweckmäßigerweise über dem Kompressor und/oder über dem Akku 22 angeordnet. Der Kompressor 23 ist (insbesondere in Längsrichtung des Rückenteils 8 und/oder Vertikalrichtung) über dem Akku 22 angeordnet.

Der Akku 22 dient als elektrische Energieversorgung für das Exoskelett 20, insbesondere für den Kompressor 23, die Ventileinheit 24, eine Sensoreinrichtung 6 und/oder eine Steuereinrichtung 7.

Der Kompressor 23 ist ausgebildet, Luft zu komprimieren, um Druckluft zu erzeugen. Der Drucklufttank 25 ist ausgebildet, Druckluft - insbesondere die von dem Kompressor 23 erzeugte Druckluft - zu speichern.

Die Ventileinheit 24 umfasst zweckmäßigerweise ein oder mehrere elektrisch betätigbare Ventile und ist insbesondere ausgebildet, eine pneumatische Verbindung von dem Drucklufttank 25 zu einer Druckkammer des pneumatischen Antriebzylinders 31 zu beeinflussen, insbesondere wahlweise herzustellen und/oder zu sperren. Zweckmäßigerweise ist die Ventileinheit 24 ferner ausgebildet, eine pneumatische Verbindung von dem Drucklufttank 25 zur Umgebung des Exoskelett 20 und/oder eine pneumatische Verbindung von der Druckkammer des Antriebszylinders 31 zur Umgebung des Exoskelett 20 zu beeinflussen, insbesondere wahlweise herzustellen und/oder zu sperren. Die Ventileinheit 24 ist zweckmäßigerweise Teil der Aktoreinrichtung 5.

Das Exoskelett 20 umfasst ferner eine Sensoreinrichtung 6. Exemplarisch umfasst die Sensoreinrichtung 6 einen Winkelsensor 37 zur Erfassung des Winkels des Unterstützungsabschnitts 3 relativ zum Basisabschnitt 1, insbesondere des Armteils 11 relativ zum Schulterteil 29. Dieser Winkel soll auch als Schwenkwinkel 47 oder als Hebewinkel bezeichnet werden. Der Winkelsensor 37 dient insbesondere zur Erfassung des Winkels des Unterstützungsabschnitts 3 um die Hebeachse 36. Der Winkelsensor 37 ist beispielsweise als Inkrementalgeber ausgeführt und insbesondere am Hebe-Drehlager 34, insbesondere im Armteil 11 und/oder im Schulterteil 29 angeordnet.

Bevorzugt umfasst die Sensoreinrichtung 6 ferner wenigstens einen Drucksensor zur Erfassung des in der Druckkammer des Antriebszylinders 31 und/oder des in dem Drucklufttank 25 herrschenden Drucks. Der wenigstens eine Drucksensor ist zweckmäßigerweise im Rückenteil 8 und/oder im Armteil 11 angeordnet.

Die Exoskelett-Vorrichtung 10, insbesondere das Exoskelett 20, umfasst zweckmäßigerweise eine Steuereinrichtung 7, die beispielsweise einen Microcontroller umfasst oder als Microcontroller ausgeführt ist. Die Steuereinrichtung 7 dient insbesondere dazu, die Aktoreinrichtung 5, insbesondere die Ventileinheit 24, anzusteuern, um die Bereitstellung der Unterstützungskraft zu steuern. Ferner dient die Steuereinrichtung 7 zum Auslesen der Sensoreinrichtung 6, insbesondere zum Auslesen von von der Sensoreinrichtung 6 erfassten Daten und/oder zur Kommunikation mit dem Werkzeug 30 und/oder dem Mobilgerät 40. Vorzugsweise ist die Steuereinrichtung 7 ausgebildet, durch Ansteuerung der Ventileinheit 24 den in der Druckkammer des Antriebszylinders 31 herrschenden Druck einzustellen, insbesondere zu regeln, beispielsweise unter Berücksichtigung eines mittels des Drucksensors erfassten Druckwerts. Insbesondere ist die Steuereinrichtung 7 ausgebildet, zur Erhöhung der Unterstützungskraft den in der Druckkammer herrschenden Druck durch Ansteuerung der Ventileinheit 24 zu erhöhen und/oder zur Reduzierung der Unterstützungskraft den in der Druckkammer herrschenden Druck durch Ansteuerung der Ventileinheit 24 zu reduzieren.

Gemäß einer bevorzugten Ausgestaltung ist die Steuereinrichtung 7 ausgebildet, die Unterstützungskraft auf Basis des insbesondere mittels des Winkelsensors 37 erfassten Schwenkwinkels 47 des Unterstützungsabschnitts 3 einzustellen. Zweckmäßigerweise kann der Anwender durch seine Muskelkraft den Schwenkwinkel 47 des Unterstützungsabschnitts 3 durch ein Verschwenken seines Arms 4 verändern, und dadurch insbesondere die Bereitstellung der Unterstützungskraft beeinflussen. Insbesondere ist die Unterstützungskraft niedrig genug, sodass der Anwender durch seine Muskelkraft den Schwenkwinkel 47 des Unterstützungsabschnitts 3 durch ein Verschwenken seines Arms 4 verändern kann. Die Unterstützungskraft wird beispielsweise durch die Auslegung des pneumatischen Systems, insbesondere des Kompressors, und/oder durch die Steuereinrichtung 7 begrenzt.

Die Steuereinrichtung 7 ist vorzugsweise Teil des Exoskeletts 20 und exemplarisch in dem Basisabschnitt 1, insbesondere in dem Rückenteil 8 angeordnet. Optional kann die Steuereinrichtung 7 zumindest teilweise in dem Mobilgerät 40 implementiert sein.

Das Exoskelett 20 umfasst exemplarisch ein Bedienelement 14, das zweckmäßigerweise über ein Bedienelement-Kabel 15 am Basisabschnitt 1 befestigt ist. Über das Bedienelement 14 kann der Anwender das Exoskelett 20 steuern und insbesondere die Unterstützungskraft aktivieren, deaktivieren und/oder auf einen aus mehreren möglichen Kraftwerten größer null einstellen.

Das Exoskelett 20 verfügt exemplarisch ferner über ein Verbindungselement 26, über das die Schultergelenkanordnung 9 an dem Basisabschnitt 1, insbesondere dem Rückenteil 8, befestigt ist. Das Verbindungselement 26 ist exemplarisch als Auszugelement ausgeführt. Das Verbindungselement 26 ist zweckmäßigerweise relativ zum Basisabschnitt 1, insbesondere relativ zum Rückenteil 8, in seiner Position verstellbar, um die Position der Schultergelenkanordnung 9 und des Unterstützungsabschnitts 3 an die Schulterbreite des Anwenders anpassen zu können. Insbesondere ist die Position des Verbindungselements 26 durch Einschieben oder Ausziehen des Verbindungselements 26 in oder aus dem Rückenteil 8 verstellbar.

Exemplarisch verfügt das Exoskelett 20 über einen ersten Unterstützungsabschnitt 3A, eine erste Schultergelenkanordnung 9A und ein erstes Verbindungselement 26A, sowie über einen zweiten Unterstützungsabschnitt 3B, eine zweite Schultergelenkanordnung 9B und über ein zweites Verbindungselement 26B. Die Komponenten, deren Bezugszeichen mit dem Zusatz "A" oder "B" versehen sind, sind zweckmäßigerweise jeweils in Entsprechung zu den mit der gleichen Bezugszeichen-Zahl aber ohne den Zusatz "A" oder "B" versehenen Komponenten ausgeführt, beispielsweise gleich oder spiegelsymmetrisch, so dass die diesbezüglichen Erläuterungen in Entsprechung gelten.

Der erste Unterstützungsabschnitt 3A, die erste Schultergelenkanordnung 9A und das erste Verbindungselement 26A sind auf einer ersten, exemplarisch der rechten, Seite (in Breitenrichtung) des Basisabschnitts 1 angeordnet, und dienen zur Unterstützung eines ersten, insbesondere des rechten, Arms des Anwenders.

Der zweite Unterstützungsabschnitt 3B, die zweite Schultergelenkanordnung 9B und das zweite Verbindungselement 26B sind auf einer zweiten, exemplarisch der linken, Seite (in Breitenrichtung) des Basisabschnitts 1 angeordnet, und dienen zur Unterstützung eines zweiten, insbesondere des linken, Arms des Anwenders.

Der erste Unterstützungsabschnitt 3A umfasst ein erstes Armteil 11A, eine erste Armbefestigung 12A und/oder eine erste Aktoreinheit, insbesondere einen ersten Antriebszylinder.

Der zweite Unterstützungsabschnitt 3A umfasst ein zweites Armteil 11B, eine zweite Armbefestigung 12B und/oder eine zweite Aktoreinheit, insbesondere einen zweiten Antriebszylinder.

Bevorzugt ist die Steuereinrichtung 7 ausgebildet, für den ersten Unterstützungsabschnitt 3A eine mittels der ersten Aktoreinheit bewirkte erste Unterstützungskraft einzustellen und für den zweiten Unterstützungsabschnitt 3B eine mittels der zweiten Aktoreinheit bewirkte zweite Unterstützungskraft einzustellen, die sich zweckmäßigerweise von der ersten Unterstützungskraft unterscheidet.

Die erste Schultergelenkanordnung 9A umfasst einen ersten inneren Schultergelenkabschnitt 27A, einen ersten äußeren Schultergelenkabschnitt 28A und ein erstes Schulterteil 29A. Die zweite Schultergelenkanordnung 9B umfasst einen zweiten inneren Schultergelenkabschnitt 27B, einen zweiten äußeren Schultergelenkabschnitt 28B und ein zweites Schulterteil 29B.

Der erste Unterstützungsabschnitt 3A ist um eine erste horizontale Hebeachse 36A relativ zum Basisabschnitt 1 verschwenkbar und der zweite Unterstützungsabschnitt 3B ist um eine zweite horizontale Hebeachse 36B relativ zum Basisabschnitt 1 verschwenkbar.

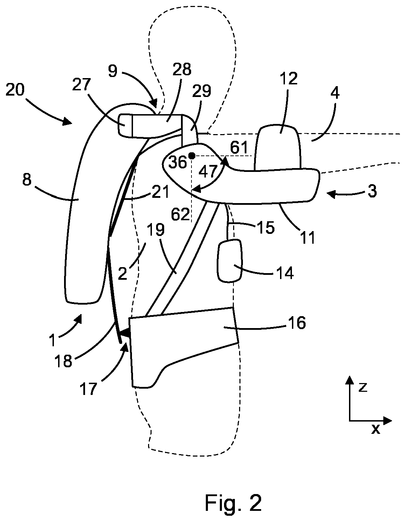

In der Figur 2 ist das Exoskelett 20 in einem Zustand gezeigt, in dem es von einem Anwender getragen, insbesondere bestimmungsgemäß getragen, wird. Mit der Formulierung, dass der Anwender das Exoskelett 20 trägt, insbesondere bestimmungsgemäß trägt, ist gemeint, dass der Anwender das Exoskelett angezogen - also angelegt - hat, und zwar exemplarisch dadurch, dass der Anwender das Rückenteil 8 rucksackartig auf seinem Rücken trägt, den Beckengurt 16 um seine Hüfte angelegt hat, der oder die die Schultergurte 19 über die Schulter oder die Schultern des Anwenders verlaufen und/oder ein oder beide Arme des Anwenders mit einer jeweiligen Armbefestigung 12 am jeweiligen Unterstützungsabschnitt 3 befestigt sind.

Exemplarisch ist das Exoskelett 20 ausgebildet, den Anwender bei einer Hebebewegung eines jeweiligen Arms, also bei einem nach oben gerichteten Verschwenken des jeweiligen Unterstützungsabschnitts 3 um eine jeweilige Hebeachse 36 mit einer jeweiligen, insbesondere nach oben wirkenden, Unterstützungskraft zu unterstützen. Ferner ist das Exoskelett 20 zweckmäßigerweise ausgebildet, den Anwender bei einer Senkbewegung, also bei einem nach unten gerichteten Verschwenken des jeweiligen Unterstützungsabschnitts 3 um eine jeweilige Hebeachse 36 mit einer jeweiligen insbesondere nach oben wirkenden Unterstützungskraft zu unterstützen oder entgegenzuwirken oder die jeweilige Unterstützungskraft bei der Senkbewegung zu deaktivieren oder zu reduzieren.

Nachstehend soll näher auf die eingangs erwähnte Erfassung einer Lageinformation eingegangen werden.

Die Sensoreinrichtung 6 ist ausgebildet, eine Lageinformation zu erfassen, die eine Lage des Exoskeletts 20, insbesondere des Basisabschnitts 1 und/oder des Unterstützungsabschnitts 3, in Bezug auf die Umgebung, insbesondere in Bezug auf die Schwerkraft, anzeigt.

Beispielsweise umfasst die Sensoreinrichtung 6 einen oder mehrere Lagesensoren 38 zur Erfassung der Lageinformation. Insbesondere umfasst die Sensoreinrichtung 6 als Lagesensor 38 einen Beschleunigungssensor und/oder ein Gyroskop und/oder eine inertiale Messeinheit und/oder ein Magnetometer und/oder einen optischen Sensor. Ein oder mehrere Lagesensoren 38 können am Basisabschnitt 1, insbesondere am Rückenteil 8 und/oder am Beckengurt 16, angeordnet sein und sollen dann als Basisabschnitt-Lagesensoren bezeichnet werden. Ferner können ein oder mehrere Lagesensoren 38 am Unterstützungsabschnitt 3, insbesondere am Armteil 11 angeordnet sein und sollen dann als Unterstützungsabschnitt-Lagesensoren bezeichnet werden.

In einer bevorzugten Ausgestaltung umfasst das Exoskelett 20 als Lagesensor 38 einen am Armteil 11 angeordneten Beschleunigungssensor, einen am Rückenteil 8 angeordneten Beschleunigungssensor, ein am Rückenteil 8 angeordnetes Gyroskop und/oder einen am Beckengurt 16 angeordneten Beschleunigungssensor.

Bevorzugt ist das Exoskelett 20 ausgebildet, mittels der Sensoreinrichtung 6, insbesondere des wenigstens einen Lagesensor 38, als die Lageinformation eine Neigung, insbesondere einen Neigungswinkel 39, relativ zur Umgebung, insbesondere relativ zur Schwerkraft, zu erfassen.

Optional kann die Exoskelett-Vorrichtung 10 einen oder mehrere separat von dem Exoskelett 20 angeordnete Lagesensoren zur Erfassung der Lageinformation umfassen. Beispielsweise kann ein Lagesensor in einem Gürtel oder einer Weste integriert sein.

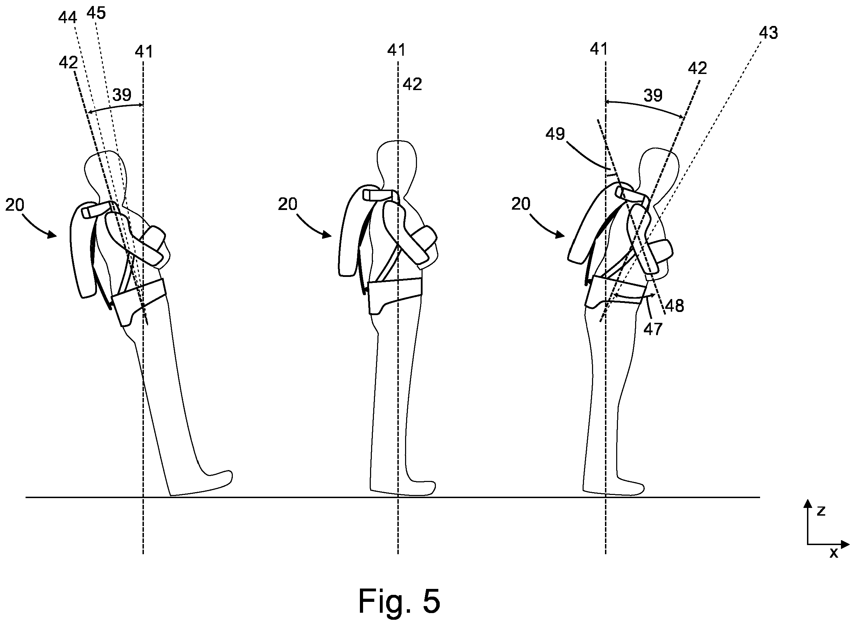

In der Figur 5 ist die Richtung 41 der Schwerkraft als gestrichelte Linie eingezeichnet. Die Schwerkraft-Richtung 41 verläuft parallel zur z-Richtung und/oder ist insbesondere antiparallel und/oder entgegengesetzt zur z-Richtung ausgerichtet. Ferner ist in der Figur 5 eine ortsfest zu dem Exoskelett 20, insbesondere dem Basisabschnitt 1, vorzugsweise dem Rückenteil 8, angeordnete, insbesondere gedachte, vertikale Ausrichtungsachse 42 eingezeichnet. Wenn der das Exoskelett 20 tragende Anwender aufrecht steht, ist die Ausrichtungsachse 42 vertikal ausgerichtet, insbesondere parallel zur Schwerkraft-Richtung 41. Die Ausrichtungsachse 42 ist beispielsweise gleich der Basisabschnitt-Achse 62.

Der mittels des Lagesensors 38 erfasste Neigungswinkel 39 ist zweckmäßigerweise der Winkel zwischen der Schwerkraft-Richtung 41 und der Ausrichtungsachse 42.

Der von der Sensoreinrichtung 6 erfasste Neigungswinkel 39 zeigt zweckmäßigerweise die Neigung des Torsos 2 des Anwenders an - also insbesondere die Oberkörperhaltung des Anwenders. Eine Neigung nach vorne - beispielsweise bei einer nach vorne gebeugten Oberkörperhaltung des Anwenders, wie in der Figur 5 rechts gezeigt - soll als positive Neigung bezeichnet werden und führt zu einem positiven Neigungswinkel 39. Eine Neigung nach hinten - beispielsweise bei einer nach hinten gebeugten Oberkörperhaltung des Anwenders, wie in der Figur 5 links gezeigt - soll als negative Neigung bezeichnet werden und führt zu einem negativen Neigungswinkel 39. Bei einer parallel zur Schwerkraft-Richtung ausgerichteten Ausrichtungsachse 42 ist der Neigungswinkel 39 gleich null.

Optional kann die Sensoreinrichtung 6 einen optischen Sensor, insbesondere einen Bildsensor, aufweisen, und die Steuereinrichtung 7 kann ausgebildet sein, die Lageinformation, insbesondere den Neigungswinkel 39 auf Basis von mit dem optischen Sensor erfassten optischen Sensordaten zu bestimmen, beispielsweise indem die Steuereinrichtung 7 Marker in den Sensordaten erkennt und basierend auf einer erkannten Position und/oder Ausrichtung der Marker auf die Lageinformation schließt.

Gemäß einer möglichen Ausgestaltung ist die Steuereinrichtung 7 ausgebildet, als die Lageinformation einen Winkel des Unterstützungsabschnitts 3, insbesondere der Längsachse 48 des Unterstützungsabschnitts 3, relativ zur Schwerkraft-Richtung 41 zu erfassen. Dieser Winkel soll auch als Unterstützungsabschnitt-Absolutwinkel 49 bezeichnet werden.

Bevorzugt erfasst die Steuereinrichtung 7 den Unterstützungsabschnitt-Absolutwinkel 49 direkt, insbesondere mittels eines beispielsweise als Beschleunigungssensor ausgeführten Unterstützungsabschnitt-Lagesensors. Ferner kann die Steuereinrichtung 7 den Unterstützungsabschnitt-Absolutwinkel 49 indirekt erfassen, und zwar indem die Steuereinrichtung 7 den Schwenkwinkel 47 des Unterstützungsabschnitts 3 relativ zum Basisabschnitt 1 und den Neigungswinkel 39 des Basisabschnitts 1 relativ zur Schwerkraft-Richtung 41 erfasst und den Unterstützungsabschnitt-Absolutwinkel 49 auf Basis des Schwenkwinkels 47 und des Neigungswinkels 39 berechnet, insbesondere als Differenz zwischen dem Schwenkwinkel 47 und dem Neigungswinkel 39.

Die Längsachse 48 des Unterstützungsabschnitts 3 ist beispielsweise gleich oder parallel zur Unterstützungsabschnitt-Achse 61.

Gemäß einer bevorzugten Ausgestaltung umfasst das Exoskelett 20 einen am Unterstützungsabschnitt 3 angeordneten Unterstützungsabschnitt-Lagesensor, der insbesondere als Beschleunigungssensor ausgeführt ist, und die Steuereinrichtung 7 ist ausgebildet, mit dem Unterstützungsabschnitt-Lagesensor die Lageinformation, insbesondere den Neigungswinkel 39 des Basisabschnitts 1, insbesondere des Rückenteils 8, relativ zur Schwerkraft zu erfassen. Bevorzugt ist die Steuereinrichtung 7 ausgebildet, bei der Erfassung der Lageinformation einen Winkel - exemplarisch den Schwenkwinkel 47 - zwischen dem Basisabschnitt 1 und dem Unterstützungsabschnitt 3 zu berücksichtigen.

Beispielsweise erfasst die Steuereinrichtung 7 mit dem Winkelsensor 37 den Schwenkwinkel 47 des Unterstützungsabschnitts 3 relativ zum Basisabschnitt 1 und mit dem Unterstützungsabschnitt-Lagesensor den Unterstützungsabschnitt-Absolutwinkel 49 des Unterstützungsabschnitts 3 relativ zur Schwerkraft und berechnet aus dem Schwenkwinkel 47 und dem Unterstützungsabschnitt-Absolutwinkel 49 den Neigungswinkel 39 des Basisabschnitts 1 relativ zur Schwerkraft als die Lageinformation.

Nachstehend soll näher darauf eingegangen werden, wie die Lageinformation verwendet werden kann.

Die Steuereinrichtung 7 ist ausgebildet, auf Basis der erfassten Lageinformation die Bereitstellung der Unterstützungskraft anzupassen und/oder auf Basis der erfassten Lageinformation die Form des Basisabschnitts 1 und/oder die Anbringung des Basisabschnitts 1 am Anwender anzupassen.

Zunächst zu der Anpassung der Unterstützungskraft:
Gemäß einer bevorzugten Ausgestaltung ist die Steuereinrichtung 7 ausgebildet, auf Basis der erfassten Lageinformation die Bereitstellung der Unterstützungskraft so anzupassen, dass der Einfluss einer Neigung des Basisabschnitts 1 relativ zur Umgebung, insbesondere relativ zur Schwerkraft, auf die Unterstützungskraft kompensiert wird.

Insbesondere ist die Steuereinrichtung 7 ausgebildet, in Ansprechen auf eine erfasste Lageinformation, die eine größere Neigung des Basisabschnitts 1 relativ zur Umgebung, insbesondere zur Schwerkraft, anzeigt, eine kleinere Unterstützungskraft zu bewirken als in Ansprechen auf eine erfasste zweite Lageinformation, die eine kleinere Neigung des Basisabschnitts anzeigt, insbesondere bei gleichem Winkel des Unterstützungsabschnitts 3 relativ zum Basisabschnitt 1.

Beispielsweise bewirkt die Steuereinrichtung 7 in Ansprechen auf eine erfasste erste Lageinformation, die eine erste Neigung des Basisabschnitts 1 relativ zur Umgebung, insbesondere zur Schwerkraft, anzeigt, eine erste Unterstützungskraft, und bewirkt in Ansprechen auf eine erfasste zweite Lageinformation, die eine zweite Neigung des Basisabschnitts anzeigt, eine zweite Unterstützungskraft insbesondere bei gleichem Schwenkwinkel 47 des Unterstützungsabschnitts relativ zum Basisabschnitt. Die erste Neigung ist größer als die zweite Neigung und die erste Unterstützungskraft ist kleiner als die zweite Unterstützungskraft. Insbesondere bewirkt die Steuereinrichtung 7 bei größer werdendem Neigungswinkel 39 eine kleiner werdende Unterstützungskraft (bei konstantem Schwenkwinkel 47).

Zweckmäßigerweise stellt die Steuereinrichtung 7 die Unterstützungskraft abhängig vom Schwenkwinkel 47 ein, insbesondere derart, dass die Unterstützungskraft in wenigstens einem ersten Schwenkwinkel-Bereich mit zunehmendem Schwenkwinkel 47 zunimmt. Beispielsweise soll die Unterstützungskraft bei einem senkrecht nach unten ausgerichteten Arm des Anwenders minimal, beispielsweise gleich null, sein.

Wenn der Anwender seinen Oberkörper und damit den Basisabschnitt 1 nach vorne beugt, und seinen Arm weiterhin senkrecht nach unten ausgerichtet lässt, dann erhöht sich der Schwenkwinkel 47, was aufgrund der Abhängigkeit der Unterstützungskraft vom Schwenkwinkel 47 ohne Kompensationsmaßnahme zu einer Erhöhung der Unterstützungskraft führen würde. Die Steuereinrichtung 7 erkennt anhand der Lageinformation, dass der Basisabschnitt 1 nach vorne geneigt ist, und kompensiert diesen Einfluss der Neigung des Basisabschnitts 1 (und des dadurch erhöhten Schwenkwinkels 47) auf die Berechnung der Unterstützungskraft, indem die Steuereinrichtung 7 die durch den Schwenkwinkels 47 vorgegebene Unterstützungskraft gemäß der Neigung des Basisabschnitts 1 - also gemäß dem Neigungswinkel 39 - reduziert. Insbesondere führt die Steuereinrichtung 7 die Kompensation auf Basis des Neigungswinkels 39 derart durch, dass bei senkrecht nach unten ausgerichtetem Arm 4 und nach vorne geneigtem Basisabschnitt 1 die Unterstützungskraft minimal, insbesondere gleich null, ist, insbesondere für jeden Neigungswinkel 39.

Vorzugsweise führt die Steuereinrichtung 7 die Kompensation auf Basis des Neigungswinkels 39 derart durch, dass bei einem innerhalb eines vorbestimmten Winkelbereichs nach unten ausgerichteten Arm 4 und nach vorne geneigtem Basisabschnitt 1 die Unterstützungskraft minimal, insbesondere gleich null, ist, insbesondere für jeden Neigungswinkel 39. Der vorbestimmte Winkelbereich erstreckt sich zweckmäßigerweise von minus 10 Grad bis plus 10 Grad in Bezug auf die Schwerkraft-Richtung 41 oder von minus 20 Grad bis plus 20 Grad in Bezug auf die Schwerkraft-Richtung 41.

Insbesondere führt die Steuereinrichtung 7 eine Korrektur der Unterstützungskraft - also der Kraftunterstützung eines oder beider Arme - entsprechend der erfassten Körperhaltung - nämlich der Lageinformation, insbesondere dem Neigungswinkel 39 - durch.

Gemäß einer bevorzugten Ausgestaltung steuert die Steuereinrichtung 7 die Unterstützungskraft derart, dass die Unterstützungskraft unabhängig von der Neigung des Basisabschnitts 1 - also unabhängig von dem Neigungswinkel 39 - und insbesondere abhängig von dem Unterstützungsabschnitt-Absolutwinkel 49 ist. Beispielsweise stellt die Steuereinrichtung 7 die Unterstützungskraft auf Basis des Unterstützungsabschnitt-Absolutwinkels 49 ein.

Zweckmäßigerweise wird die Unterstützungskraft derart eingestellt, dass senkrecht nach unten hängende, insbesondere senkrecht nach unten ausgerichtete, Arme insbesondere unabhängig von der Oberkörperneigung keine Unterstützungskraft erfahren.

Gemäß einer bevorzugten Ausgestaltung ist die Steuereinrichtung 7 ausgebildet, die Unterstützungskraft gemäß einer Kennlinie 52 einzustellen, die die Unterstützungskraft in Abhängigkeit zu einem Winkel - insbesondere dem Schwenkwinkel 47 - zwischen dem Basisabschnitt 1 und dem Unterstützungsabschnitt 3 setzt. Die Steuereinrichtung 7 ist ausgebildet, auf Basis der erfassten Lageinformation die Kennlinie 52 zu skalieren und/oder in Bezug auf den Winkel zu verschieben. Ferner ist die Steuereinrichtung 7 ausgebildet, die Unterstützungskraft gemäß der skalierten und/oder verschobenen Kennlinie einzustellen.

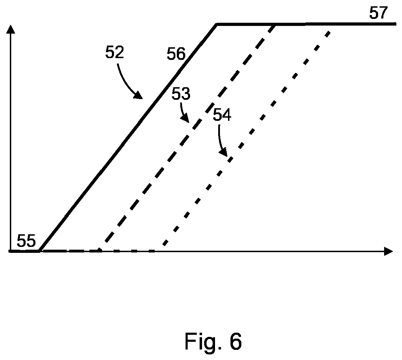

Die Figur 6 zeigt ein Schaubild mit einer exemplarischen Kennlinie 52 zusammen mit einer ersten verschobenen Kennlinie 53 und einer zweiten verschobenen Kennlinie 54. Auf der horizontalen Achse ist der Schwenkwinkel 47 aufgetragen und auf der vertikalen Achse die Unterstützungskraft. Die Kennlinie 52 umfasst (insbesondere in Richtung des steigenden Schwenkwinkels 47) einen ersten Kennlinien-Abschnitt 55, einen sich an den ersten Kennlinien-Abschnitt 55 anschließenden zweiten Kennlinien-Abschnitt 56 und einen sich an den zweiten Kennlinien-Abschnitt 56 anschließenden dritten Kennlinien-Abschnitt 57. Exemplarisch ist der erste Kennlinien-Abschnitt 55 konstant, insbesondere gleich null, der zweite Kennlinien-Abschnitt 56 ist steigend, insbesondere linear steigend, und der dritte Kennlinien-Abschnitt 57 ist konstant, insbesondere größer null. Gemäß der Kennlinie 52 ist also die Unterstützungskraft bei steigendem Schwenkwinkel 47 zunächst kontant null, steigt dann linear an, und bleibt dann auf einem konstanten Wert größer null.

Die Steuereinrichtung 7 ist vorzugsweise ausgebildet, auf Basis des Neigungswinkel 39 die Kennlinie 52 in Bezug auf den Schwenkwinkel 47 - also in Richtung der horizontalen Achse - zu verschieben. Beispielsweise verschiebt die Steuereinrichtung 7 die Kennlinie 52 um den Neigungswinkel 39 in Richtung des steigenden Schwenkwinkels 47. Exemplarisch verschiebt die Steuereinrichtung 7 die Kennlinie 52 bei einem ersten Neigungswinkel 39 in Richtung des steigenden Schwenkwinkels 47 um den ersten Neigungswinkel 39, um die erste verschobene Kennlinie 53 zu erhalten. Ferner verschiebt die Steuereinrichtung 7 die Kennlinie 52 bei einem zweiten Neigungswinkel 39 in Richtung des steigenden Schwenkwinkels 47 um den zweiten Neigungswinkel 39, um die zweite verschobene Kennlinie 53 zu erhalten. Exemplarisch ist der zweite Neigungswinkel 39 größer als der erste Neigungswinkel 39 und der zweite Kennlinien-Abschnitt der ersten verschobenen Kennlinie 53 liegt in Richtung der horizontalen Achse des Schaubilds zwischen dem zweiten Kennlinien-Abschnitt 56 der Kennlinie 52 und dem zweiten Kennlinien-Abschnitt der zweiten verschobenen Kennlinie 54.

Gemäß einer optionalen Ausgestaltung ist die Steuereinrichtung 7 ausgebildet, die Unterstützungskraft gemäß einer Kennlinie 52 einzustellen, die die Unterstützungskraft in Abhängigkeit zu einem Winkel - insbesondere dem Unterstützungsabschnitt-Absolutwinkel 49 - zwischen der Schwerkraft-Richtung 41 und dem Unterstützungsabschnitt 3 setzt.

Gemäß einer bevorzugten Ausgestaltung ist die Steuereinrichtung 7 ausgebildet, in Ansprechen darauf, dass die erfasste Lageinformation eine Neigung des Basisabschnitts 1 relativ zur Umgebung, insbesondere zur Schwerkraft, anzeigt, die einen Neigungs-Schwellenwert übersteigt oder unterschreitet, eine Reduzierung und/oder Deaktivierung der Unterstützungskraft zu bewirken.

In der Figur 5 sind exemplarische Neigungs-Schwellenwerte gezeigt. Exemplarisch vergleicht die Steuereinrichtung 7 den Neigungswinkel 39 mit einem ersten Neigungs-Schwellenwert 43, der eine Neigung nach vorne anzeigt und insbesondere positiv ist, und bewirkt die Reduzierung und/oder Deaktivierung der Unterstützungskraft als Reaktion darauf, dass der Neigungswinkel 39 den ersten Neigungs-Schwellenwert 43 überschreitet. Der erste Neigungs-Schwellenwert 43 beträgt beispielsweise 50°. Exemplarisch vergleicht die Steuereinrichtung 7 den Neigungswinkel 39 mit einem zweiten Neigungs-Schwellenwert 44, der eine Neigung nach hinten anzeigt und insbesondere negativ ist, und bewirkt die Reduzierung und/oder Deaktivierung der Unterstützungskraft als Reaktion darauf, dass der Neigungswinkel 39 den zweiten Neigungs-Schwellenwert 44 unterschreitet. Der zweite Neigungs-Schwellenwert 44 beträgt beispielsweise -30°. Zweckmäßigerweise unterscheiden sich der erste Neigungs-Schwellenwert 43 und der zweite Neigungs-Schwellenwert 44 in ihrem Betrag. Zweckmäßigerweise ist der erste Neigungs-Schwellenwert 43 betragsmäßig größer als der zweite Neigungs-Schwellenwert 44.

Bevorzugt ist die Steuereinrichtung 7 ausgebildet, in Ansprechen darauf, dass die erfasste Lageinformation eine Neigung des Basisabschnitts 1 relativ zur Umgebung, insbesondere zur Schwerkraft, anzeigt, die einen Neigungs-Schwellenwert übersteigt und/oder unterschreitet und/oder sich nahe dem Neigungs-Schwellenwert befindet, eine Ausgabe eines durch den Anwender der Exoskelett-Vorrichtung 10 wahrnehmbaren Warnsignals zu bewirken.

Beispielsweise vergleicht die Steuereinrichtung 7 den Neigungswinkel 39 mit einem Warn-Neigungs-Schwellenwert 45 und bewirkt die Ausgabe des Warnsignals, wenn der Neigungswinkel 39 den Warn-Neigungs-Schwellenwert 45 überschreitet oder unterschreitet. Im gezeigten Beispiel ist der Warn-Neigungs-Schwellenwert 45 für eine Neigung nach hinten definiert und dementsprechend negativ, beispielsweise -20°. Alternativ oder zusätzlich dazu kann ein Warn-Neigungs-Schwellenwert für eine Neigung nach vorne definiert sein. Der Warn-Neigungs-Schwellenwert 45 ist in seinem Betrag zweckmäßigerweise kleiner als der erste Neigungs-Schwellenwert 43 und/oder der zweite Neigungs-Schwellenwert 44.

Die Exoskelett-Vorrichtung 10, beispielsweise das Exoskelett 20 und/oder das Mobilgerät 40, verfügt über eine von der Steuereinrichtung 7 angesteuerte Ausgabeeinrichtung zur Ausgabe des Warnsignals. Beispielsweise wird das Warnsignal von der Aktoreinrichtung 5, insbesondere dem Antriebszylinder 31, bereitgestellt, beispielsweise als Vibration.

Das Warnsignal ist beispielsweise ein optisches, akustisches und/oder taktiles Signal. Zweckmäßigerweise ist die Steuereinrichtung 7 ausgebildet, das Warnsignal in seiner Intensität zu erhöhen, je weiter sich der Neigungswinkel 39 an einen Neigungs-Schwellenwert annähert. Die Erhöhung der Intensität erfolgt beispielsweise durch einen zunehmend schneller tönenden Warnton, ein zunehmend schnelleres Blinken einer Warnleuchte im Gesichtsfeld des Nutzers und/oder einer zunehmend stärkeren Vibration des Unterstützungsabschnitts 3.

Exemplarisch ist die Steuereinrichtung 7 ausgebildet, die Unterstützungskraft bei zunehmender Annäherung des Neigungswinkels 39 an einen Neigungs-Schwellenwert sukzessive zu reduzieren. Beispielsweise zeigt das Exoskelett 20 bei Annährung an den zweiten Neigungs-Schwellenwert 44 bei Oberkörperrücklage zunächst eine optische, akustische und/oder taktile Warnung an, reduziert bei weiterer Annäherung die Unterstützungskraft sukzessive und eskaliert die optische, akustische und/oder taktile Warnung, bevor das Exoskelett 20 die Unterstützungskraft bei Unterschreiten des zweiten Neigungs-Schwellenwerts bei Oberkörperrücklage ganz abschaltet. Beispielsweise erfolgt dabei bis zum Abschalten der Unterstützungskraft eine lineare Reduktion der Unterstützungskraft.

Gemäß einer bevorzugten Ausgestaltung ist die Steuereinrichtung 7 ausgebildet, auf Basis der erfassten Lageinformation eine Notsituation, beispielsweise einen freien Fall, insbesondere des Anwenders, zu detektieren.

Beispielsweise zeigt die Lageinformation eine Beschleunigung des Exoskeletts an. Die Steuereinrichtung 7 ist zweckmäßigerweise ausgebildet, die Lageinformation, insbesondere eine erfasste Beschleunigung, mit einem Notsituation-Schwellenwert zu vergleichen und bei Erreichen des Notsituation-Schwellenwerts die Notsituation zu detektieren.

Insbesondere ist die Steuereinrichtung 7 ausgebildet, in Ansprechen auf die detektierte Notsituation eine Notreaktion zu bewirken, insbesondere eine Deaktivierung der Unterstützungskraft und/oder eine Deaktivierung des Werkzeugs 30 und/oder das Absetzen eines Notrufs, insbesondere mittels des Mobilgeräts 40, und/oder ein Absprengen des Exoskeletts 20 von dem Anwender.

Bevorzugt wird die Notsituation mittels eines vom Anwender getragenen Sensors, insbesondere eines (mehrachsigen) Beschleunigungssensors, detektiert und als Reaktion auf die detektierte Notsituation versetzt eine Regelungssoftware (die beispielsweise auf der Steuereinrichtung 7 ausgeführt wird) die von dem Anwender verwendeten Geräte - insbesondere das Exoskelett 20, das Werkzeug 30 und/oder das Mobilgerät 40) in einen Notfallreaktionsmodus.

Gemäß einer bevorzugten Ausgestaltung verfügt die Steuereinrichtung 7 über wenigstens zwei manuell und/oder automatisch auswählbare Presets, die jeweils über wenigstens eine Preset-Charakteristik verfügen, die eine Unterstützungskraft-Vorgabe in Abhängigkeit von wenigstens einer Eingangsgröße, insbesondere der erfassten Lage und/oder des Schwenkwinkels 47, festlegt, wobei sich die wenigstens zwei Presets in ihrer Preset-Charakteristik unterscheiden. Die Steuereinrichtung 7 ist ausgebildet, unter Verwendung eines aus den wenigstens zwei Presets ausgewählten Presets die Unterstützungskraft-Vorgabe in Abhängigkeit von der Eingangsgröße zu ermitteln und die Unterstützungskraft auf Basis der Unterstützungskraft-Vorgabe einzustellen. Die Presets können auch als Anwendungsprofile bezeichnet werden und die Preset-Charakteristiken können auch als Anwendungsprofil-Charakteristiken bezeichnet werden.

Bevorzugt ist die Steuereinrichtung ausgebildet, auf Basis der erfassten Lageinformation das Preset aus den wenigstens zwei Presets auszuwählen. Beispielsweise kann die Steuereinrichtung 7 auf Basis einer (gemäß der Lageinformation detektierten) Oberkörperhaltung automatisch ein Preset aktivieren.

Zweckmäßigerweise ist ein Preset vom Anwender erstellbar und/oder konfigurierbar, insbesondere mittels des Mobilgeräts 40. Beispielsweise umfasst ein Preset eine Arbeitsbereich-Information, die definiert, in welchem Bereich des Neigungswinkels 39 die Unterstützungskraft bereitgestellt werden soll. Beispielsweise ist ein Überkopfarbeit-Preset vorhanden, das die Arbeitsbereich-Information enthält, dass ab einem ersten vorbestimmten positiven Neigungswinkel 39, also ab einer ersten vorbestimmten Oberkörpervorlage keine Unterstützungskraft bereitgestellt werden soll. Zweckmäßigerweise ist ferner ein Last-Anhebe-Preset vorhanden, das die Arbeitsbereich-Information enthält, dass bei dem ersten vorbestimmten positiven Neigungswinkel 39 die Unterstützungskraft noch bereitgestellt werden soll. Unterschiedliche Presets definieren also zweckmäßigerweise unterschiedliche Bereiche des Neigungswinkels 39, in denen die Unterstützungskraft bereitgestellt werden soll. Innerhalb der Arbeitsbereiche, in denen die Unterstützungskraft bereitgestellt wird, legen die Preset zweckmäßigerweise eine Abhängigkeit zwischen der Unterstützungskraft und dem Schwenkwinkel 47 fest.

Bevorzugt ist mittels der Exoskelett-Vorrichtung 10, insbesondere mittels des Mobilgeräts 40, eine Anpassung einer Kennlinie, die die Unterstützungskraft in Abhängigkeit zu dem Schwenkwinkel 47 setzt, in Abhängigkeit des Neigungswinkels 39 konfigurierbar und als Bestandteil eines Presets speicherbar.

Nachstehend soll näher darauf eingegangen werden, wie auf Basis der Lageinformation die Form des Basisabschnitts 1 und/oder die Anbringung des Basisabschnitts 1 am menschlichen Körper angepasst werden kann.

Gemäß einer bevorzugten Ausgestaltung verfügt der Basisabschnitt 1 über ein Rückenelement. Exemplarisch wird das Rückenelement durch das Rückenteil 8 und das Kraftübertragungselement 18 gebildet. Die Steuereinrichtung 7 ist ausgebildet, auf Basis der erfassten Lageinformation eine Steifigkeit, Länge und/oder Stellung des Rückenelements anzupassen.

Beispielsweise ist das Exoskelett 20 ausgebildet, auf Basis der Lageinformation den Kraftübertragungselement-Winkel 46 anzupassen, insbesondere derart, dass bei größerem Neigungswinkel 39 der Kraftübertragungselement-Winkel 46 verkleinert wird, insbesondere durch rotatorische Bewegung des Kraftübertragungselements 18 um die Verstellachse relativ zum Rückenteil 8. Auf diese Weise kann die Form des Basisabschnitts 1 an die Körperhaltung des Anwenders angepasst werden.

Bevorzugt ist das Exoskelett 20 ausgebildet, auf Basis der Lageinformation eine Biegesteifigkeit des Rückenelements insbesondere um eine parallel zur y-Richtung verlaufende Biegeachse anzupassen.

Beispielsweise passt das Exoskelett 20 die Steifigkeit des Kraftübertragungselements 18 in Abhängigkeit des (von der Lageinformation angezeigten) Oberkörperwinkels an, insbesondere derart, dass das Kraftübertragungselement 18 bei aufrechter Haltung des Anwenders eine höhere Steifigkeit besitzt als bei vorgebeugter Haltung.

Beispielsweise ist das Exoskelett 20 ausgebildet, auf Basis der Lageinformation die Länge, insbesondere die vertikale Erstreckung, des Rückenelements anzupassen, insbesondere durch translatorische Bewegung des Kraftübertragungselements 18 relativ zum Rückenteil 8.

Gemäß einer bevorzugten Ausgestaltung verfügt der Basisabschnitt über einen Befestigungsgurt, insbesondere den Beckengurt 16, und die Steuereinrichtung 7 ist ausgebildet, auf Basis der erfassten Lageinformation die Spannung des Befestigungsgurts zu variieren, insbesondere zu straffen oder zu entspannen. Beispielsweise wird die Spannung des Beckengurts 16 des Anwenders reduziert, wenn der Nutzer sich nach vorne beugt und wird wieder gestrafft, wenn der Nutzer wieder eine aufrechte Haltung einnimmt.

Bevorzugt umfasst das Exoskelett 20 einen oder mehrere von der Steuereinrichtung 7 angesteuerte elektrische und/oder pneumatische Aktoren, beispielsweise einen Rückenelement-Aktor und/oder einen Beckengurt-Aktor, zur Vornahme einer oder mehrerer der genannten Anpassungen.

## Patentansprüche

1. Exoskelett-Vorrichtung (10), umfassend:
ein Exoskelett (20) mit:
- einem Basisabschnitt (1) zur Anbringung an einen Körperabschnitt, insbesondere den Torso (2), eines menschlichen Körpers,
- einem beweglich mit dem Basisabschnitt (1) gekoppelten Unterstützungsabschnitt (3) zur Unterstützung eines Körperteils, vorzugsweise einer Gliedmaße, insbesondere eines Arms (4), des menschlichen Körpers,
- einer auf den Unterstützungsabschnitt (3) wirkenden, insbesondere pneumatischen, Aktoreinrichtung (5) zur Bereitstellung einer Unterstützungskraft für den Körperteil,
wobei die Exoskelett-Vorrichtung (10) ferner umfasst:
- eine Sensoreinrichtung (6) zur Erfassung einer Lageinformation, die eine Lage des Exoskeletts (20), insbesondere des Basisabschnitts (1) und/oder des Unterstützungsabschnitts (3), in Bezug auf die Umgebung, insbesondere in Bezug auf die Schwerkraft, anzeigt, und
- eine Steuereinrichtung (7) zur Ansteuerung der Aktoreinrichtung (5), wobei die Steuereinrichtung (7) ausgebildet ist, auf Basis der erfassten Lageinformation die Bereitstellung der Unterstützungskraft anzupassen und/oder auf Basis der erfassten Lageinformation die Form des Basisabschnitts (1) und/oder die Anbringung des Basisabschnitts (1) anzupassen, wobei die Steuereinrichtung (7) ausgebildet ist, die Unterstützungskraft gemäß einer Kennlinie (52) einzustellen, die die Unterstützungskraft in Abhängigkeit zu einem Winkel zwischen dem Basisabschnitt (1) und dem Unterstützungsabschnitt (3) setzt, und die Steuereinrichtung (7) ferner ausgebildet ist, auf Basis der erfassten Lageinformation die Kennlinie zu skalieren und/oder in Bezug auf den Winkel zu verschieben.

2. Exoskelett-Vorrichtung (10) nach Anspruch 1, wobei die Steuereinrichtung (7) ausgebildet ist, auf Basis der erfassten Lageinformation die Bereitstellung der Unterstützungskraft so anzupassen, dass der Einfluss einer Neigung des Basisabschnitts (1) relativ zur Umgebung auf die Unterstützungskraft kompensiert wird.

3. Exoskelett-Vorrichtung (10) nach Anspruch 1 oder 2, wobei die Steuereinrichtung (7) ausgebildet ist, in Ansprechen auf eine erfasste Lageinformation, die eine größere Neigung des Basisabschnitts (1) anzeigt, eine kleinere Unterstützungskraft zu bewirken als in Ansprechen auf eine erfasste Lageinformation, die eine kleinere Neigung des Basisabschnitts (1) anzeigt, insbesondere bei gleichem Winkel des Unterstützungsabschnitts (3) relativ zum Basisabschnitt (1) .

4. Exoskelett-Vorrichtung (10) nach einem der voranstehenden Ansprüche, wobei die Steuereinrichtung (7) ausgebildet ist, in Ansprechen darauf, dass die erfasste Lageinformation eine Neigung des Basisabschnitts (1) relativ zur Umgebung anzeigt, die einen Neigungs-Schwellenwert übersteigt oder unterschreitet, eine Reduzierung und/oder Deaktivierung der Unterstützungskraft zu bewirken.

5. Exoskelett-Vorrichtung (10) nach einem voranstehenden Anspruch, wobei die Steuereinrichtung (7) ausgebildet ist, in Ansprechen darauf, dass die erfasste Lageinformation eine Neigung des Basisabschnitts (1) relativ zur Umgebung anzeigt, die einen Neigungs-Schwellenwert übersteigt und/oder unterschreitet und/oder sich nahe dem Neigungs-Schwellenwert befindet, eine Ausgabe eines durch den Anwender der Exoskelett-Vorrichtung (10) wahrnehmbaren Warnsignals zu bewirken.

6. Exoskelett-Vorrichtung (10) nach einem voranstehenden Anspruch, wobei die Steuereinrichtung (7) ausgebildet ist, auf Basis der erfassten Lageinformation eine Notsituation, beispielsweise einen freien Fall, zu detektieren.

7. Exoskelett-Vorrichtung (10) nach Anspruch 6, wobei die Steuereinrichtung (7) ausgebildet ist, in Ansprechen auf die detektierte Notsituation eine Notreaktion zu bewirken, insbesondere eine Deaktivierung der Unterstützungskraft und/oder eine Deaktivierung eines Werkzeugs (30) und/oder das Absetzen eines Notrufs und/oder ein Absprengen des Exoskeletts (20) von dem Anwender.

8. Exoskelett-Vorrichtung (10) nach einem voranstehenden Anspruch, wobei die Sensoreinrichtung (6) über ein am Unterstützungsabschnitt (3) angebrachtes Unterstützungsabschnitt-Sensorelement, insbesondere einen Beschleunigungssensor, verfügt, und die Steuereinrichtung (7) ausgebildet ist, mit dem Unterstützungsabschnitt-Sensorelement die Lageinformation zu erfassen.

9. Exoskelett-Vorrichtung (10) nach einem voranstehenden Anspruch, wobei die Steuereinrichtung (7) ausgebildet ist, bei der Erfassung der Lageinformation einen Winkel zwischen dem Basisabschnitt (1) und dem Unterstützungsabschnitt (3) zu berücksichtigen.

10. Exoskelett-Vorrichtung (10) nach einem voranstehenden Anspruch, wobei der Basisabschnitt (1) über ein Rückenelement verfügt und die Steuereinrichtung (7) ausgebildet ist, auf Basis der erfassten Lageinformation eine Steifigkeit, Länge und/oder Stellung des Rückenelements anzupassen.

11. Exoskelett-Vorrichtung (10) nach einem voranstehenden Anspruch, wobei der Basisabschnitt (1) über einen Befestigungsgurt, insbesondere einen Beckengurt (16), verfügt und die Steuereinrichtung (7) ausgebildet ist, auf Basis der erfassten Lageinformation die Spannung des Befestigungsgurts (16) zu variieren, insbesondere zu straffen oder zu entspannen.

12. Exoskelett-Vorrichtung (10) nach einem voranstehenden Anspruch, wobei die Steuereinrichtung (7) über wenigstens zwei manuell und/oder automatisch auswählbare Presets verfügt, die jeweils über wenigstens eine Preset-Charakteristik verfügen, die eine Unterstützungskraft-Vorgabe in Abhängigkeit von wenigstens einer Eingangsgröße, insbesondere der erfassten Lage, festlegt, wobei sich die wenigstens zwei Presets in ihrer Preset-Charakteristik unterscheiden, und wobei die Steuereinrichtung (7) ausgebildet ist, unter Verwendung eines aus den wenigstens zwei Presets ausgewählten Presets die Unterstützungskraft-Vorgabe in Abhängigkeit von der Eingangsgröße zu ermitteln und die Unterstützungskraft auf Basis der Unterstützungskraft-Vorgabe einzustellen.

13. Exoskelett-Vorrichtung (10) nach Anspruch 12, wobei die Steuereinrichtung (7) ausgebildet ist, auf Basis der erfassten Lageinformation das Preset aus den wenigstens zwei Presets auszuwählen.

14. Verfahren zum Betreiben einer Exoskelett-Vorrichtung (10) nach einem der voranstehenden Ansprüche, umfassend die Schritte:
- Erfassen der Lageinformation,
- auf Basis der erfassten Lageinformation, Anpassen der Unterstützungskraft und/oder Anpassen der Form und/oder Anbringung des Basisabschnitts (1).

## Claims

1. Exoskeleton device (10), comprising:
an exoskeleton (20):
- a base section (1) for attachment to a body section, in particular the torso (2), of a human body,
- a support section (3) movably coupled to the base section (1) for supporting a body part, preferably a limb, in particular an arm (4), of the human body,
- an actuator device (5), in particular a pneumatic actuator device, acting on the support section (3) for providing a support force for the body part,
wherein the exoskeleton device (10) further comprises:
- a sensor device (6) for detecting position information which indicates a position of the exoskeleton (20), in particular of the base section (1) and/or the support section (3), in relation to the environment, in particular in relation to gravity, and
- a control device (7) for controlling the actuator device (5), wherein the control device (7) is configured to adapt the provision of the support force on the basis of the detected position information and/or to adapt, on the basis of the detected position information, the shape of the base section (1) and/or the attachment of the base section (1), wherein the control device (7) is configured to set the support force according to a characteristic curve (52) which defines the support force as a function of an angle between the base section (1) and the support section (3), and the control device (7) is further configured to scale the characteristic curve on the basis of the detected position information and/or to shift the characteristic curve (52) with respect to the angle.

2. Exoskeleton device (10) according to claim 1, wherein the control device (7) is configured to adapt the provision of the support force on the basis of the detected position information in such a way that the influence of an inclination of the base section (1) relative to the environment on the support force is compensated.

3. Exoskeleton device (10) according to claim 1 or 2, wherein the control device (7) is configured to effect a smaller support force in response to detected position information indicating a greater inclination of the base section (1) than in response to detected position information indicating a smaller inclination of the base section (1), in particular at the same angle of the support section (3) relative to the base section (1).

4. Exoskeleton device (10) according to one of the preceding claims, wherein the control device (7) is configured to cause a reduction and/or deactivation of the support force in response to the detected position information indicating an inclination of the base section (1) relative to the environment which exceeds or falls below an inclination threshold value.

5. Exoskeleton device (10) according to a preceding claim, wherein the control device (7) is configured, in response to the detected position information indicating an inclination of the base section (1) relative to the environment which exceeds and/or falls below an inclination threshold value and/or is close to the inclination threshold value, to cause an output of a warning signal which is perceivable by the user of the exoskeleton device (10).

6. Exoskeleton device (10) according to a preceding claim, wherein the control device (7) is configured to detect an emergency situation, for example a free fall, on the basis of the detected position information.

7. Exoskeleton device (10) according to claim 6, wherein the control device (7) is configured to effect an emergency reaction in response to the detected emergency situation, in particular a deactivation of the support force and/or a deactivation of a tool (30) and/or the sending of an emergency call and/or a jettisoning of the exoskeleton (20) from the user.

8. Exoskeleton device (10) according to a preceding claim, wherein the sensor device (6) has a support section sensor element, in particular an acceleration sensor, attached to the support section (3), and the control device (7) is configured to detect the position information with the support section sensor element.

9. Exoskeleton device (10) according to a preceding claim, wherein the control device (7) is configured to take into account an angle between the base section (1) and the support section (3) when detecting the position information.

10. Exoskeleton device (10) according to a preceding claim, wherein the base section (1) has a back element and the control device (7) is designed to adjust a stiffness, length and/or position of the back element on the basis of the detected position information.

11. Exoskeleton device (10) according to a preceding claim, wherein the base section (1) has a fastening strap, in particular a pelvic strap (16), and the control device (7) is configured to vary the tension of the fastening strap (16) on the basis of the detected position information, in particular to tighten or relax it.

12. Exoskeleton device (10) according to a preceding claim, wherein the control device (7) has at least two manually and/or automatically selectable presets which each have at least one preset characteristic which defines a support force specification as a function of at least one input variable, in particular the detected position, wherein the at least two presets differ in their preset characteristics, and wherein the control device (7) is configured to determine, using a preset selected from the at least two presets, the support force specification as a function of the input variable and to set the support force on the basis of the support force preset.

13. Exoskeleton device (10) according to claim 12, wherein the control device (7) is configured to select the preset from the at least two presets on the basis of the detected position information.

14. A method of operating an exoskeleton device (10) according to any one of the preceding claims, comprising the steps of:
- detecting the position information,
- based on the detected position information, adjusting the support force and/or adjusting the shape and/or attachment of the base section (1).

## Revendications

1. Ensemble exosquelette (10) comprenant :
un exosquelette (20) avec :
- une section de base (1) destinée à être installée sur une partie du corps, en particulier le torse (2), d'un corps humain,
- une section d'assistance (3) couplée de manière mobile à la section de base (1) pour assister une partie du corps, de préférence un membre, en particulier un bras (4), du corps humain,
- un dispositif d'actionneur (5), en particulier pneumatique, agissant sur la section d'assistance (3) pour fournir une force d'assistance à la partie du corps, dans lequel l'ensemble exosquelette (10) comprend en outre :
- un dispositif de détection (6) destiné à détecter une information de position, qui indique une position de l'exosquelette (20), en particulier de la section de base (1) et/ou de la section d'assistance (3), par rapport à l'environnement, en particulier par rapport à la gravité, et
- un dispositif de commande (7) destiné à piloter le dispositif d'actionneur (5), dans lequel le dispositif de commande (7) est réalisé pour adapter, sur la base de l'information de position détectée, la mise à disposition de la force d'assistance et/ou pour adapter, sur la base de l'information de position détectée, la forme de la section de base (1) et/ou l'installation de la section de base (1), dans lequel le dispositif de commande (7) est réalisé pour régler la force d'assistance selon une courbe caractéristique (52), qui définit la force d'assistance en fonction d'un angle entre la section de base (1) et la section d'assistance (3), et le dispositif de commande (7) est en outre réalisé pour mettre à l'échelle, sur la base de l'information de position détectée, la courbe caractéristique et/ou pour la décaler par rapport à l'angle.

2. Ensemble exosquelette (10) selon la revendication 1, dans lequel le dispositif de commande (7) est réalisé pour adapter, sur la base de l'information de position détectée, la mise à disposition de la force d'assistance de manière à compenser l'influence d'une inclinaison de la section de base (1) par rapport à l'environnement sur la force d'assistance.

3. Ensemble exosquelette (10) selon la revendication 1 ou 2, dans lequel le dispositif de commande (7) est réalisé pour entraîner, en réponse à une information de position détectée qui indique une inclinaison supérieure de la section de base (1), une force d'assistance inférieure à celle en réponse à une information de position détectée qui indique une inclinaison inférieure de la section de base (1), en particulier pour un angle identique de la section d'assistance (3) par rapport à la section de base (1).

4. Ensemble exosquelette (10) selon l'une quelconque des revendications précédentes, dans lequel le dispositif de commande (7) est réalisé pour entraîner une réduction et/ou une désactivation de la force d'assistance en réponse au fait que l'information de position détectée indique une inclinaison de la section de base (1) par rapport à l'environnement, qui dépasse ou ne dépasse pas une valeur de seuil d'inclinaison.

5. Ensemble exosquelette (10) selon une revendication précédente, dans lequel le dispositif de commande (7) est réalisé pour entraîner une sortie d'un signal d'avertissement perceptible par l'utilisateur de l'ensemble exosquelette (10) en réponse au fait que l'information de position détectée indique une inclinaison de la section de base (1) par rapport à l'environnement, qui dépasse ou ne dépasse pas une valeur de seuil d'inclinaison et/ou est proche de la valeur de seuil d'inclinaison.

6. Ensemble exosquelette (10) selon une revendication précédente, dans lequel le dispositif de commande (7) est réalisé pour détecter une situation d'urgence, par exemple une chute libre, sur la base de l'information de position détectée.

7. Ensemble exosquelette (10) selon la revendication 6, dans lequel le dispositif de commande (7) est réalisé pour provoquer une action d'urgence en réponse à la situation d'urgence détectée, en particulier une désactivation de la force d'assistance et/ou une désactivation d'un outil (30) et/ou l'émission d'un appel d'urgence et/ou un éclatement de l'exosquelette (20) par l'utilisateur.

8. Ensemble exosquelette (10) selon la revendication précédente, dans lequel le dispositif de capteur (6) dispose d'un élément de capteur de section d'assistance, en particulier d'un capteur d'accélération, installé sur la section d'assistance (3), et le dispositif de commande (7) est réalisé pour détecter l'information de position avec l'élément de capteur de section d'assistance.

9. Ensemble exosquelette (10) selon une revendication précédente, dans lequel le dispositif de commande (7) est réalisé pour prendre en compte un angle entre la section de base (1) et la section d'assistance (3) lors de la détection de l'information de position.

10. Ensemble exosquelette (10) selon une revendication précédente, dans lequel la section de base (1) dispose d'un élément dorsal et le dispositif de commande (7) est réalisé pour adapter une rigidité, une longueur et/ou une position de l'élément dorsal sur la base de l'information de position détectée.

11. Ensemble exosquelette (10) selon une revendication précédente, dans lequel la section de base (1) dispose d'une sangle de fixation, notamment d'une sangle abdominale (16), et le dispositif de commande (7) est réalisé pour faire varier la tension de la sangle de fixation (16), en particulier pour la tendre ou la détendre, sur la base de l'information de position détectée.

12. Ensemble exosquelette (10) selon une revendication précédente, dans lequel le dispositif de commande (7) dispose d'au moins deux préréglages pouvant être sélectionnés manuellement et/ou automatiquement, qui disposent chacun d'au moins une caractéristique de préréglage qui fixe une spécification de force d'assistance en fonction d'au moins une grandeur d'entrée, en particulier de la position détectée, dans lequel les au moins deux préréglages diffèrent dans leur caractéristique de préréglage, et dans lequel le dispositif de commande (7) est réalisé pour déterminer la spécification de force d'assistance en fonction de la grandeur d'entrée et pour régler la force d'assistance sur la base de la spécification de force d'assistance en utilisant un préréglage sélectionné parmi les au moins deux préréglages.

13. Ensemble exosquelette (10) selon la revendication 12, dans lequel le dispositif de commande (7) est réalisé pour sélectionner le préréglage parmi les au moins deux préréglages sur la base de l'information de position détectée.

14. Procédé pour faire fonctionner un ensemble exosquelette (10) selon l'une quelconque des revendications précédentes, comprenant les étapes :
- de détection de l'information de position,
- d'adaptation, en fonction de l'information de position détectée, de la force d'assistance et/ou d'adaptation de la forme et/ou de l'installation de la section de base (1).
